# EUROPEAN PATENT APPLICATION

(11) **EP 3 246 837 A1**
(43) Date of publication of application: **22.11.2017**
(21) Application number: 16170423.4
(22) Date of filing: 19.05.2016
(51) Int. Cl.: G06F 21/14, G06F 9/44

(54) **METHOD TO GENERATE SPECIAL PURPOSE VIRTUAL MACHINES**

(71) Applicant: SFNT Germany GmbH, 82110 Germering (DE)
(72) Inventor: WEBER, Andreas, 82110 GERMERING (DE)
(74) Representative: Scheer, Luc

(57) **Abstract**

The present invention relates to a method of generating a virtual machine (VM) to be used for the execution of assembly level programs, said method comprising the step of translating a given program (ALG) formulated in an assembly language into a high level program (RTSq) formulated in a randomly generated, program specific, high level programming language (#X), said method further comprising the generation of an interpreter (VM) for the high level programming language (#X), so that the interpreter (VM) together with the generated high level program (RTSq) computes the same function as the given assembly level program (ALG) when executed on its machine.

## Description

### FIELD OF THE INVENTION

The present invention relates to a method of generating a virtual machine to be used for the execution of assembly level programs and to computer program product to implement the invention.

The invention also pertains to a computer program product comprising instructions to implement the method of the invention and to a computer program product implementing the virtual machine obtained with the invention.

The invention also relates to a device comprising a computer program product comprising instructions to implement the method of the invention.

The invention relates at last to a bytecode program as generated by the virtual machine generator and compatible with the generated virtual machine.

### BACKGROUND OF THE INVENTION

The generation of different Virtual Machines (VM) is useful because a VM can serve as an effective technique for software obfuscation by confronting an attacker with an unknown machine. In order to keep the unknown machine property, it is necessary to not reuse a VM but instead generate a new one during the protection process.

Known approaches to VM diversity usually start with one or more hand-written VM designs and then create a new VM by morphing and mixing specific aspects of the input VM architectures. These aspects might include:
- Assignment of VM operations to OpCodes
- The bytecode format, e.g. binary, alpha numeric, Huffman encoded, fixed length instructions, variable length instructions, etc.
- The type of the machine, e.g. stack based, register based, von Neumann architecture, Harvard architecture, etc.
- The dispatch mechanism of the VM, e.g. table dispatch, switch statement, threaded code, etc.
- The properties of the instruction set, e.g. number of instructions, number of registers, 2-address code, 3-address code, conditional execution, etc.

The main problem of these approaches is that every modification to the instruction set of the generated VM must also be reflected in the code generator targeting the generated VM. This means the VM generator must not only generate a VM but also a compatible compiler backend that is able to translate some intermediate representation, e.g. LLVM-IR, gcc's GIMPLE, etc., into bytecode for the generated VM. Considering the effort necessary to port an existing compiler toolchain such as LLVM or GCC to a new but fixed CPU architecture it is clear that it is a very complex problem to create a backend generator that is able to mutate multiple aspects of the target architecture.

Another problem is that the burden of complexity mainly rests on the defenders side. Creating a capable backend generator can be considered a hard problem, but the resulting VM architectures are still rather fixed in the sense, that the backend generator can only mutate a relatively small number of dimensions, each of them supporting only a relatively small number of choices. This enables significant learning effects on the attacker's side effectively reducing security.

Further alternative and advantageous solutions would, accordingly, be desirable in the art.

### SUMMARY OF THE INVENTION

The present invention aims at increasing security because it prevents or at least slows down learning effects on attacker's side.

The present invention is defined, in its broadest sense, as a method of generating a virtual machine to be used for the execution of assembly level programs, said method comprising the step of translating a given program formulated in an assembly language into a high level program formulated in a randomly generated, program specific, high level programming language, said method further comprising the generation of an interpreter for the high level programming language, so that the interpreter together with the generated high level program computes the same function as the given assembly level program when executed on its machine.

The invention works differently of the prior art techniques by not mutating specific aspects of an otherwise fixed target architecture but instead using a given input program to generate a language specification from which the VM and its accepted bytecode can be programmatically derived. This approach does not require any backend generation and achieves its diversity by exploiting degrees of freedom during language specification leading to a VM whose bytecode is structurally bound to the input program used for VM generation. The invention thus relates to a software that accepts an assembly level program, for example a general purpose one, as input and creates randomly a new special purpose programming language, an interpreter for this language and a program written in this language that is functionally equivalent to the input program. It is here noted that the invention can be combined with known prior art diversification on a general purpose assembly level program, the previously diversified assembly level program being the given program as used in the invention. The invention thus results in the production of an application specific VM.

The invention introduces a high degree of bytecode diversity regarding syntax and semantic while creating a VM that is very specific to its intended program. Thereby most VM operations do not have an individual bytecode encoding, which prevents a traditional disassembly. Also manipulating the bytecode does not allow an attacker to execute arbitrary VM operations individually. This makes it hard to learn the semantics of individual VM operations through probing. Lexers/Parsers generated by flex/bison or similar tools are table driven, which makes them difficult to understand and allow further specialized obfuscations, e.g. const2code, obfuscation techniques for finite state machines.

In a preferred implementation, the method comprises the following steps to generate the high level programming language, the high level program and the interpreter:
- with respect to the length of the assembly level input program, create randomly a token stream of sufficient length and complexity, this token stream being the high level program;
- create a random tree, where the leaf nodes are the tokens from the token stream, treated as a parse tree, where leaf nodes represent terminals, inner nodes represent non-terminals and the tree's root node represents the start symbol of the grammar describing the high level programming language;
- analyze the created random parse tree and record place and execution order of action spots, an action spot being an application of a grammar rule of the generated high level programming language;
- place the assembly level programming language operations from the input program at appropriate action spots so that execution order of the input program is preserved;
- translate the random parse tree into a set of grammar rules which define placed assembly level programming language operations as their parser actions;
- generate a parser from the grammar, the resulting parser being the interpreter as it executes the assembly operations as parser actions while consuming the randomly generated token stream.

Such a sequence of steps enables to extract from a given assembly level program, the high level programming language according to the invention and to build the interpreter/parser according to the invention.

Thus, more concretely, the software generates randomly a formal grammar with parser actions that implement the necessary assembly operations and a matching token stream representing the encoded input program.

The actual VM is then a parser conforming to the generated grammar. When the token stream is parsed by the generated parser, it also executes as a side effect the input program while performing the parse effectively interpreting the bytecode. The grammar is constructed in a way that it can be used as input for a parser generator (e.g. yacc, bison, etc) allowing the automatic generation of the VM. This means the VM is in fact a parser for the generated programming language where the parser actions do not build some sort of abstract syntax tree/intermediate representation as parsers usually do but instead execute the assembly level operations of the input program.

In the invention, the random token stream is the parser's view of the input. It is a pre-processed version of the raw input, where things like keywords, identifiers etc. have been already recognized, so that the parser does not have to deal with individual characters but sees whole keywords, identifiers, arithmetic operators, etc. The tokens are recognized by a lexer (lexical scanner) reading a character stream and identifying the tokens of the high level programming language.

### Example: Character stream: "if var1 > var2 then"

A lexer for this language might produce the following token steam: KEYWORD_IF - IDENTIFIER - KEYWORD_GT - IDENTIFIER - KEYWORD THEN.

The parser just sees the random token stream. So if one would rename all keywords of a high level programming language, this renaming would only affect the lexer but not the actual parser.

Preferably, action spots located more far away from leaf nodes are selected.

This feature ensures that we generate a high level programming language, where individual tokens do not map directly to the assembly level operations, but instead form high level language constructs, i.e. the non-terminals.

The present invention also relates to computer program product comprising instructions to implement the method of the invention. Such compiled executables that implement the VM generator.

The present invention also relates to a computer program product for interpreting a randomly generated high level programming language that is constructed according to the method of the invention in a way so it expresses a given assembly level program used itself for constructing the high level programming language as used by the interpreter computer program. This corresponds to compiled executables implementing the generated VM and bytecode.

The present invention also relates a device comprising computer program product comprising instructions to implement the method of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents from a grammar perspective an exemplary sequence of bytecodes in a virtual machine as known in the prior art;
- Figure 2 schematically represents from a grammar perspective an exemplary sequence of bytecodes in a virtual machine according to the invention;
- Figure 3 shows a flowchart of the method of the invention;
- Figure 4 schematically shows the final execution of the obtained virtual machine.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

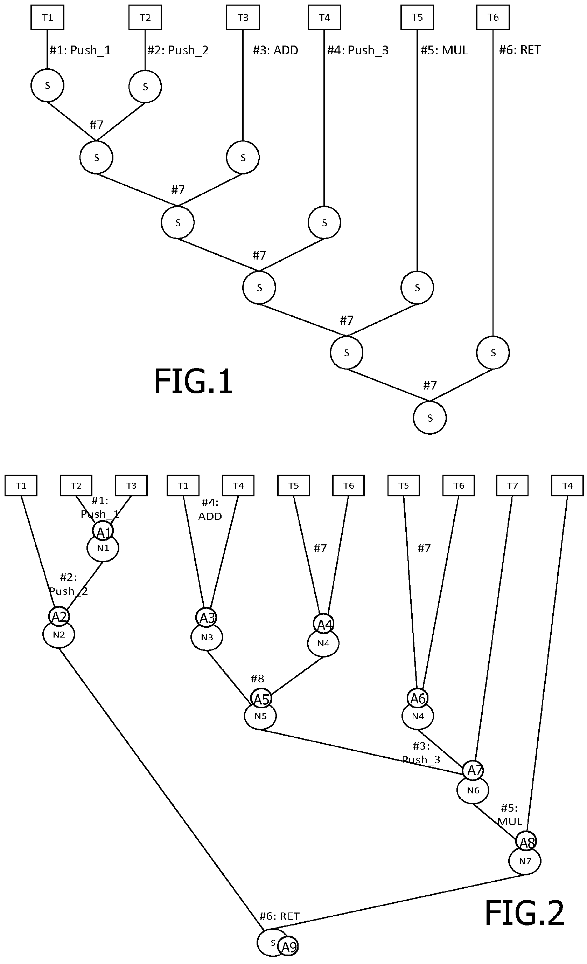

Figure 1 schematically represents an exemplary sequence of bytecodes in a virtual machine as known in the prior art and the corresponding parse tree from a grammar perspective. The input assembly level program is a series of symbolic general purpose operations (ADD, MUL, DIV, LOAD, etc.). A VM that directly supports these operations would have a rather simple grammar resulting in a very uniform parse tree as shown on figure 1. On this figure is shown the parse tree obtained for a simple assembly level program being a simple sequence ALG of operations for a stack machine: PUSH_1, PUSH_2, ADD, PUSH_3, MUL, RET. This program ALG returns 9 when executed, (1 +2) * 3=9.

A traditional VM design maps every operation to a unique opcode and at runtime dispatches the execution to the desired operation via its opcode, e.g. using a big switch statement. For such a design, the bytecode might look like this: T1 T2 T3 T4 T5 T6 as shown on figure 1. Here every VM-operation is mapped to a unique token and the sequence of tokens (T1, T2, etc.) is thus the actual bytecode. The parse tree is shown on figure 1.

The corresponding grammar is the following:
#1: S: T1 { PUSH_1 }
#2: S: T2 { PUSH_2 }
#3: S: T3 { ADD }
#4: S: T4 { PUSH_3 }
#5: S: T5 { MUL }
#6: S: T6 { RET }
#7: S: S S

The grammar rules are numbered from #1 to #7; in curly braces is the action the parser, or interpreter, performs when it substitutes the right side of a rule with the left side, thus when reduction rule is applied. For example, when the parser sees the token T5 on the parse stack, it replaces it with the start symbol S and executes MUL.

The parser consumes tokens left-to-right, and processes them with its reduction rules. The parser accepts the input when all input tokens are consumed and the only symbol left on the parse stack is the start symbol S.

The parsing log is thus the following:
T1: Reduce with Rule #1: Execute PUSH_1
T2: Reduce with Rule #2: Execute PUSH_2
   Reduce with Rule #7
T3: Reduce with Rule #3: Execute ADD
   Reduce with Rule #7
T4: Reduce with Rule #4: Execute PUSH 3
   Reduce with Rule #7
T5: Reduce with Rule #5: Execute MUL
   Reduce with Rule #7
T6: Reduce with Rule #6: Execute RET
   Reduce with Rule #7.

The invention changes the above by randomly generating a token stream and a non-uniform parse tree that is then translated into a grammar with carefully placed actions so that the correct assembly level operations are executed in the right order when the randomly generated token stream is parsed by the generated parser/interpreter.

Figure 2 schematically represents such an exemplary sequence of a randomly generated token stream and a grammar/parse tree that was derived from the randomly generated token stream according to the invention. It is here noted that there is no correspondence between the tokens from figure 1 and figure 2, these can be completely different. The actual byte representation of the tokens can be anything, e.g. keywords like "if" "then", "else", or binary opcodes such as 0xAA 0xBEEF etc.

As besides well known, only the lexer, which is the first step in parser, and the bytecode writer of the VM generation tool have to agree on the particular format of a specific token.

The input assembly level program ALG is thus still: PUSH_1 PUSH_2 ADD PUSH_3 MUL RET.

Constructing the grammar as shown in figure 2 starts by a random creation of a sufficiently large token stream RTSq, here T1, T2, T3, T1, T4, T5, T6, T5, T6, T7, T4.

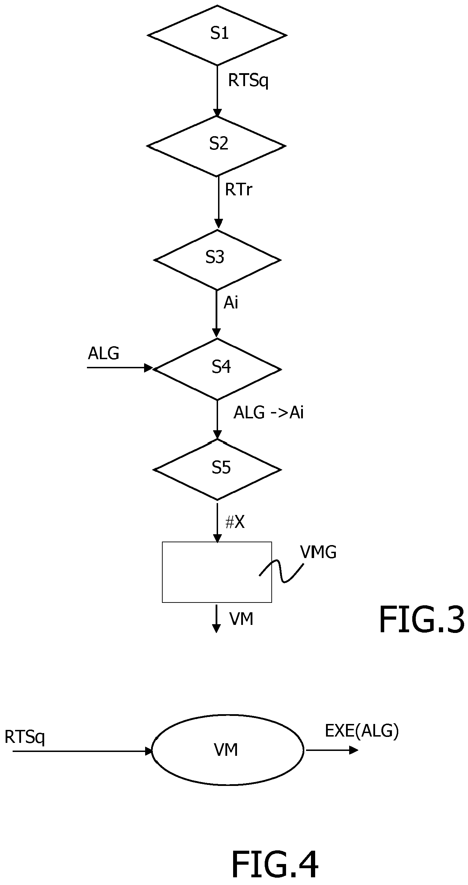

In addition to figure 2, figure 3 shows a flowchart of the method of the invention. In a first step S1, a random token sequence RTSq is generated.

This random token stream RTSq is used as terminals to form a random parse tree RTr in a step S2 by adding the N nodes, which are non-terminals of the parse tree. In the obtained tree RTr, inner nodes are non-terminals and the tree's root note is the start symbol S of the finally obtained grammar. The obtained random parse tree, where the leaf nodes consist of the token stream, is shown on figure 2.

After creation, the created parse tree is analyzed. It enables to record place and execution order of the action spots Ai in a step S3, as noted on figure 2. An action spot Ai is the application of a rule executed in the order as the token stream is parsed. Action spots Ai are the paths to the nodes shown with reference Ai on figure 2. The difference is the numbering as the order of the action spots is determined by the structure of the parse tree.

Thus, the trees action spots in their execution order when the parser parses the token stream are: A1, A2, A3, A4, A5, A6, A7, A8, A9.

Operations from the input assembly level code ALG PUSH_1, PUSH_2, ADD, PUSH_3, MUL and RET are then placed in a step S4 at appropriate action spots so that the execution order of the input VM program is preserved. Spots more far away from leaf nodes, i.e. terminals, are preferred, so that not only the terminals but also the non-terminals receive program semantics.

The parse tree RTr is then translated into a set of grammar rules #X in a step S5.

Here the obtained grammar is the following:
#1: N1: T2 T3 { PUSH_1 }
#2: N2: T1 N1 { PUSH_2 }
#3: N6: N5 N4 T7 { PUSH_3 }
#4: N3: T1 T4 {ADD}
#5: N7: N6 T4 { MUL }
#6: S: N2 N7 { RET }
#7: N4: T5 T6
#8: N5: N3 N4

Thus, for example, rule #3 tells the parser that when it sees at runtime the sequence Non-Terminal N5, Non-Terminal N4 and token T7 on its parse stack, it should replace this sequence with the Non-Terminal N6 and execute PUSH_3.

This grammar is then feed into a parser generator (bison, yacc, etc.) that generates the parser. The generated parser is the VM. In figure 3 VMG denotes the parser generator and VM denotes output of the parser generator. When one feeds the token sequence RTSq into this VM it will perform the following actions, see also Figure 4:
T1: No Rule => SHIFT T1
T2: No Rule => SHIFT T2
T3: Reduce with Rule #1: Executing PUSH_1
   Reduce with Rule #2: Executing PUSH_2
T1: No Rule => SHIFT T1
T4: Reduce with Rule #4: Executing ADD
T5: No Rule => SHIFT T5
T6: Reduce with Rule #7
   Reduce with Rule #8
T5: No Rule => SHIFT T5
T6: Reduce with Rule #7
T7: Reduce with Rule #3: Executing PUSH_3
T4: Reduce with Rule #5: Executing MUL
   Reduce with Rule #6: Executing RET

An interesting property is that tokens T1 and T4 appear multiple times in the bytecode, each time carrying a different meaning:
1 st T1 is part of PUSH_2,
2nd T1 is part of ADD,
1 st T4 is part of ADD,
2nd T4 is part of MUL.

There is here almost no meaningful disassembly of individual tokens. An interesting property is that all non-leaf VM operations (PUSH_2, PUSH_3, MUL, RET) do not have a meaningful disassembly, e.g. PUSH_2 can only be represented as the sequence T1, T2, T3 which executes both PUSH_1 and PUSH_2. Indeed, an attacker would try to disassemble the bytecode in order to understand the algorithm the VM executes. But with this setup, individual assembly instructions do not have a meaningful disassembly.

Only the sequences: T2, T3 -> PUSH_1 and T1, T4 -> ADD directly translate to operations from the assembly level program used for bytecode/VM construction. In fact, the instructions PUSH_1 and ADD have a meaningful disassembly because they only consist of terminal symbols. The other parser operations cannot be expressed on their own in the bytecode language but only together with other operations. For example the encoding of the PUSH_2 is T1, T2, T3 which does not only execute PUSH_2 but instead PUSH_1 followed by PUSH_2. The encoding of RET incorporates the complete program.

This means that the parser is very specific to its intended program as it does not support executing a single RET or MUL instruction, but only allows these operations in the context of the original program.

Figure 4 schematically shows the execution of the given program according to the invention. The obtained virtual machine VM receives the random token stream RTSq. While parsing the token stream RTSq, the generated parser, which is the VM, executes the parser actions and thus executes ALG, in the figure EXE(ALG).

An actual implementation receives as input an assembly level program and the implementation of the assembly level operations, typically as C source, and then generates:
- The input for the parser generator, e.g. a bison grammar,
- The input for the scanner generator, e.g. flex, to recognize the tokens,
- The token stream encoded according to the scanner generator.

Then it would run flex and bison to generate the source of the VM as C code and then it would compile this code to get the actual VM capable of executing the encoded token stream.

Thus the construction of the high level language are the steps S1 to S5 from figure 3. The parser is then automatically generated from the grammar using existing parser generators, e.g. bison etc.

With the invention, the developer wants to hide an algorithm from an attacker's eyes. So the developer does not compile the algorithm into e.g. x86 machine code but instead into bytecode for a VM and also embeds the VM into the program. For the attack situation, it is assumed that the attacker has deep knowledge about x86 and also has powerful tools to analyze x86 machine code (e.g. IDA Pro). With the invention, when the attacker analyzes the program with his x86 tools, he just sees the x86 machine instructions of the VM but not the x86 machine instructions of the hidden algorithm because the algorithm is not represented as x86 machine instructions but instead is represented as data which, when interpreted by the VM, computes the algorithm.

This means the attacker must first understand the VM, to be able to understand the structure of the data. Once he did this, he is able to disassemble the data into individual VM instructions where he can actually see the algorithm.

To make this form of algorithm hiding effective, it is necessary that the VM is actually unknown. Otherwise it is only a matter of time until the attacker updates his tools, so he is equally fast in analyzing the bytecode data as he is in analyzing x86 machine code. The use of a given program for each VM or for each time a diversified VM is requested is particularly advantageous.

The invention works a bit like a "backwards" compiler: First some random code, the high level program, is generated, then a random grammar is constructed that accepts the just generated code as a valid program and then the semantic is added via the parser actions to the grammar, so that the generated code behaves the same as the input assembly level program.

It is at last here reminded that the token stream is a program's code. It is a sequence of elementary constructs of the given programming language. What the token stream means is defined by the grammar and the semantics of the programming language. The original token stream T1, T2, T3, T4, T5, T6 and the randomly generated token stream are just two programs in two completely different programming languages.

The programming language of the given original program is for example a general purpose, assembly like language, which means it has a very simple grammar, where every token maps directly to a machine operation, e.g. add, mul, etc.

The program of the invention is a randomly generated token stream that does not mean anything without the grammar. After constructing the grammar, the token stream is a program in a randomly constructed high level programming language. It is a high level language because the tokens do not map directly to machine operations but instead form high-level language constructs (in "normal" programming languages (C, Java, etc.) these high-level constructs are if-statements, for-loops etc.). Although the generated program, i.e. the token stream, now adheres to the grammar, it still means nothing, because so far the high-level language constructs do not define any semantics. The semantics are added with the parser actions. So with the placed actions, the randomly generated token stream is a program written in a "strange" high level language as defined by the grammar that happens to do the same thing as the assembly level input program.

The actual byte representation of the tokens in the computer's memory is defined by the Lexer (Lexical Scanner), which is responsible for recognizing the tokens before passing them to the parser.

For example, the random generated token stream could be this: T1 T2 T3 T1 T4 T5 T6 T2. To retrieve the actual byte representation of this token stream the individual tokens must be mapped to a byte representation, e.g. one could map them as this:
T1: keyword "if"
T2: identifier
T3: keyword "do"
T4: keyword "<"
T5: integer_literal
T6: keyword ","

In this case the bytecode for this token stream could be this:
if var1 do if < 4711 , func1
or equally valid this:
if something do if < 0 , exit

Alternatively one could also map the tokens to numeric ids, e.g.
T1: 1
T2: 2
T3: 3
T4: 4
T5: 5
T6: 6

In this case the bytecode would look like this:
12314562

This means the actual byte representation of the tokens only matters for the lexer, the parser always just sees the individual tokens. For the parser it does not matter if token T1 is represented by the ASCII sequence "if" or by the 16bit value 0xBEEF or by something completely different.

In the above detailed description, reference is made to the accompanying drawings that show, by way of illustration, specific embodiments in which the invention may be practiced. These embodiments are described in sufficient detail to enable those skilled in the art to practice the invention.

## Claims

1. Method of generating a virtual machine (VM) to be used for the execution of assembly level programs, said method comprising the step of translating a given program (ALG) formulated in an assembly language into a high level program (RTSq) formulated in a randomly generated, program specific, high level programming language (#X), said method further comprising the generation of an interpreter (VM) for the high level programming language (#X), so that the interpreter (VM) together with the generated high level program (RTSq) computes the same function as the given assembly level program (ALG) when executed on its machine.

2. Method according to claim 1, comprising the following steps to generate the high level programming language (#X), the high level program (RTSq) and the interpreter (VM):
- with respect to the length of the assembly level input program (ALG), create randomly a token stream (RTSq) of sufficient length and complexity, this token stream (RTSq) being the high level program;
- create a random tree (RTr), where the leaf nodes are the tokens from the token stream (RTSq), treated as a parse tree, where leaf nodes (Ti) represent terminals, inner nodes represent non-terminals and the tree's root node represents the start symbol of the grammar describing the high level programming language;
- analyze the created random parse tree (RTr) and record place and execution order of action spots (Ai), an action spot (Ai) being an application of a grammar rule of the generated high level programming language;
- place the assembly level programming language operations from the input program (ALG) at appropriate action spots (Ai) so that execution order of the input program (ALG) is preserved;
- translate the random parse tree (RTr) into a set of grammar rules (#X) which define the placed assembly level programming language operations as their parser actions;
- generate a parser from the grammar (#X), the resulting parser being the interpreter (VM) as it executes the assembly instructions as parser actions while consuming the randomly generated token stream (RTSq).

3. Method according to claim 2, wherein action spots (Ai) located more far away from leaf nodes (Ti) are selected.

4. Computer program product comprising instructions to implement the method of one of the preceding claims.

5. Computer program product for interpreting a randomly generated high level program (RTSq) that is constructed according to the method of one of claims 1 to 3 in a way so it expresses a given assembly level program (ALG) used itself for constructing the high level programming language (#X) as used by the interpreter computer program.

6. Device comprising computer program product comprising instructions to implement the method of one of claims 1 to 3.
